(19) Europäisches Patentamt
European Patent Office
Office européen des brevets

(11) **EP 3 026 671 A1**

(12) **EUROPEAN PATENT APPLICATION**

(43) Date of publication:
01.06.2016 Bulletin 2016/22

(51) Int Cl.:
*G11B 27/28* (2006.01)    *G06K 9/00* (2006.01)
*H04N 5/14* (2006.01)    *G06F 17/30* (2006.01)

(21) Application number: 14306894.8

(22) Date of filing: 26.11.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: **Thomson Licensing**
**92130 Issy-les-Moulineaux (FR)**

(72) Inventors:
• **Baveye, Yoann**
**35576 Cesson-Sévigné (FR)**

• **Dellandrea, Emmanuel**
**69134 Ecully Cedex (FR)**
• **Chen, Liming**
**69134 Ecully Cedex (FR)**
• **Chamaret, Christel**
**35576 Cesson-Sévigné (FR)**

(74) Representative: **Perrot, Sébastien**
**Technicolor**
**1-5 rue Jeanne d'Arc**
**92130 Issy les Moulineaux Cedex (FR)**

(54) **Method and apparatus for detecting emotional key frame**

(57)    A method and an apparatus for detecting a key frame from a sequence of frames are suggested. The method includes: computing a second characteristic for each frame in a subset of frames having a first characteristic; and selecting, as the key frame, one or more frames in the subset based on the computed second characteristic. Embodiments of the disclosure illustrate detection of emotional events in a more sophisticated and psychologically-inspired way.

300 ⟶ SEQUENCE OF FRAMES

DETERMINE A SUBSET OF THE FRAMES
THAT HAVE A FIRST CHARACTERISTIC — 302

COMPUTE A SECOND CHARACTERISTIC FOR
EACH FRAME IN THE SUBSET — 304

SELECT, AS EMOTIONAL KEY FRAME, ONE
OR MORE FRAMES IN THE SUBSET BASED
ON THE COMPUTED SECOND
CHARACTERISTIC — 306

EMOTIONAL KEY FRAME(S)

**Fig. 3**

**Description**

**TECHNICAL FIELD**

The disclosure relates to image processing, and more particularly, to method and apparatus for detecting a key frame from a sequence of frames.

**BACKGROUND**

Prior art mostly focus on extracting key frame that are representative of the whole video segments. As a consequence, they often use color-based or clustering techniques to find the frame the most similar to the other frames. Other key frame extraction methods are motion-based or saliency-based in order to summarize the most visually salient events content. But these selected key frames may not be relevant to detect events requiring adaptive reaction from viewers. A more sophisticated and psychologically-inspired way of computing them is required in the context of emotion-based applications.

**SUMMARY**

According to a first aspect of the disclosure, a method for detecting a key frame from a sequence of frames is provided. The method comprises: computing a second characteristic for each frame in a subset of frames having a first characteristic; and selecting, as the key frame, one or more frames in the subset based on the computed second characteristic.

In an embodiment, the key frame is an emotional key frame that represents emotion and the first characteristic is suddenness indicating occurrence of a sudden event, comprising, for each of the frames of said subset having said first characteristic, computing a divergence between said frame and a previous frame; and determining that this frame has suddenness if the computed divergence is larger than a preset threshold.

In an embodiment, the key frame is an emotional key frame that represents emotion and the second characteristic is novelty indicating occurrence of an event that is not familiar or predictable, wherein said computing a second characteristic for each frame in said subset comprises: computing a familiarity rate for said frame; computing a predictability rate for said frame; and computing a score of novelty by combining the computed familiarity rate and the computed predictability rate.

In an embodiment, the selecting selects one or more frames having the highest score of novelty in said subset.

In an embodiment, computing a familiarity rate for said frame comprises: computing a memorability rate by means of a memorability model as the familiarity rate.

In an embodiment, computing a predictability rate for said frame uses mutual information computed between said frame and one or more previous frames.

In an embodiment, the combining is based on the inverse of a sum of the computed familiarity rate and of the computed predictability rate.

According to a second aspect of the disclosure, an apparatus for detecting a key frame from a sequence of frames is provided. The apparatus comprises: a computation unit configured to compute a second characteristic for each frame in a subset of frames having a first characteristic; and a selection unit configured to select, as the key frame, one or more frames in the subset based on the computed second characteristic.

In an embodiment, said key frame is an emotional key frame that represents emotion, and the apparatus further comprises a determination unit configured to determine said first characteristic as suddenness indicating occurrence of a sudden event, wherein said determination unit is configured to, for each of the frames, compute a divergence between said frame and a previous frame; and
determine that this frame has suddenness if the computed divergence is larger than a preset threshold.

In an embodiment, the key frame is an emotional key frame that represents emotion and the second characteristic is novelty indicating occurrence of an event that is not familiar or predictable, wherein said computation unit is further configured to, for each frame in the subset, compute a familiarity rate for said frame; compute a predictability rate for said frame; and compute a score of novelty by combining the computed familiarity rate and the computed predictability rate.

In an embodiment, the selection unit is further configured to select one or more frames having the highest score of novelty in said subset.

In an embodiment, the computation unit is further configured to compute a predictability rate for said frame using mutual information computed between said frame and one or more previous frames.

According to a third aspect of the disclosure, there is provided an image processing device, comprising: an input part configured to receive a sequence of frames; a detection part comprising an apparatus for detecting a key frame from a sequence of frames according to the second aspect of the disclosure; and an output part configured to output the detected key frame

According to a fourth aspect of the disclosure, there is provided a computer program product downloadable from a communication network and/or recorded on a medium readable by computer and/or executable by a processor, comprising program code instructions for implementing the steps of a method according to the first aspect of the disclosure.

According to a fifth aspect of the disclosure, there is provided a non-transitory computer-readable medium comprising a computer program product recorded thereon and capable of being run by a processor, including program code instructions for implementing the steps of a method according to the first aspect of the disclosure.

**BRIEF DESCRIPTION OF THE DRAWINGS**

The above and other objects, features and advantages will be more apparent from the following description of embodiments with reference to the figures, in which:

Fig. 1    is a schematic block diagram showing an image processing device according to an embodiment of the disclosure;

Fig. 2    is a schematic block diagram showing a detection part included in the image processing device of Fig. 1 according to an embodiment of the disclosure; and

Fig. 3    is a flowchart illustrating a method for detecting emotional key frame from a sequence of frames according to an embodiment of the disclosure.

**DETAILED DESCRIPTION OF EMBODIMENTS**

The embodiments of the disclosure will be detailed below with reference to the drawings. It should be noted that the following embodiments are illustrative only, rather than limiting the scope of the disclosure. Detailed description of any well-known steps, devices, components and the like is omitted here to avoid obscuring of the disclosure.

A key frame often refers to a representative frame extracted/detected out of a group of frames. For example, in video editing or compositing, a key frame is a starting frame for a specific processing, while in video compression it is seen as an intra-frame for representing a GOP and has more bits allocated.

In computer graphics, analysis and processing of emotion has been discussed. Here, emotion is a subjective, conscious experience characterized primarily by psychophysiological expressions, biological reactions, and mental states. For purpose of processing video/image by a machine in term of the emotion, some approaches to the computational modeling of emotion are proposed. Information on the human emotion and the approaches to the computational modeling can be obtained from Scherer (see, Scherer, K. R. (2010). "The component process model: Architecture for a comprehensive computational model of emergent emotion." Blueprint for affective computing: A sourcebook, p. 47-70). It can be appreciated that in a group/sequence of frames of a video, one or more frames may represent emotion. In the disclosure, we introduce the term "emotional key frame" which refers to one or more of a group/sequence of frames representing emotion or indicating an emotional event. Here we translate, into image processing field, psychological notions that are relevant for human emotions described by Scherer. Detection of emotional key frame then can be based on such psychological notions in combination with image processing techniques.

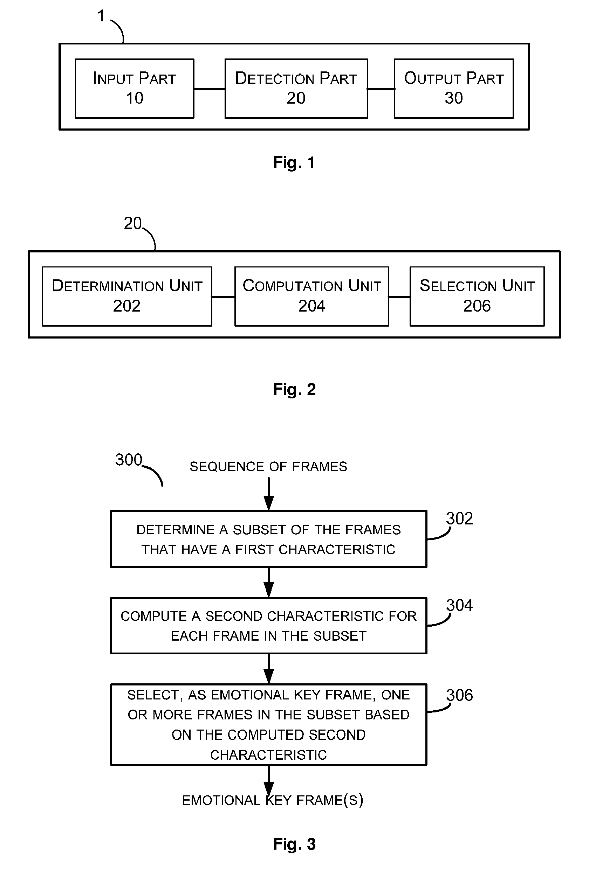

Fig. 1 is a schematic block diagram showing an image processing device according to an embodiment of the disclosure. The image processing device 1 can be any device capable of processing still and/or moving images, such as a computer or a processor executing a program for image processing. As shown in Fig. 1, the image processing device 1 includes an input part 10, a detection part 20, and an output part 30. The input part 10 can be configured to receive a sequence of frames, such as video or a stream of pictures. In an example, the input part 10 can include a communication port capable of receiving data wirelessly or in a wired manner. Alternatively, the input part 10 can include an image capturing device capable of capturing still and/or moving images. The detection part 20 can be configured to detect one or more emotional key frames from the received sequence of frames. The detection part 20 can be implemented in software, hardware, firmware, or any combination thereof. The output part 30 can be configured to output the detected emotional key frame(s). In an example, the output part 30 can be a display that presents the result of the detection to a user.

Fig. 2 is a schematic block diagram showing details of the detection part 20 according to an embodiment of the disclosure. As shown in Fig. 2, the detection part 20 includes a determination unit 202, a computation unit 204, and a selection unit 206. The determination unit 202 can be configured to determine a subset of the received frames that have a first characteristic. The computation unit 204 can be configured to compute a second characteristic for each frame in the subset. The selection unit 206 can be configured to select, as emotional key frame, one or more frames in the subset that represent an emotional event based on the computed second characteristic.

As mentioned above, we explore the psychological notions proposed by Scherer. There are three notions in the component process model developed by Scherer, i.e., suddenness, familiarity, and predictability. In the disclosure, we propose a mechanism to translate these notions into image processing field, compute and combine image/video frame characteristics based on them, in order to find an emotionally relevant key frame. Specifically, suddenness is described by a saliency detection within a frame. When occurrence of an unexpected event is detected in the frame, the frame is characterized by suddenness. Familiarity is described by an indication of whether an event is familiar, and can be determined by means of memorability models that have been recently published in computer vision community. Predictability is described by an indication of whether an event is predictable. Familiarity and predictability can be combined to mark if a frame is an emotional key frame or not. Details of these characteristics will be described below with reference to Fig. 2.

In an embodiment, the first characteristic is suddenness indicating occurrence of a sudden event. Here, a saliency model or visual attention model, such as the one described in EP patent application 04804828.4 published on 30/06/2005 under number 1695288, can be employed. This module inputs some color frames and outputs greyscale picture with values from 0 to 255 for each pixel indicating the degree of saliency or visual attractiveness. The determination unit 202 can be configured to, for each of the frames, compute a divergence between the frame and a previous frame, and determine the frame as having suddenness if the divergence is larger than a preset threshold. The divergence between the current and previous frames can be computed by means of Kullback-Leibler divergence (see, S. Kullback, Information theory and statistics, John Wiley and Sons, NY, 1959) to indicate a sudden event. In an example, for the normalized distribution Q of the saliency map of current frame q and for the normalized distribution $Q_{-1}$ of the saliency map of previous frame $q_{-1}$, a divergence D is computed in Formula (1)

$$D_{KL}(Q_{-1}||Q) = \sum_i Q_{-1}(i) \log \frac{Q_{-1(i)}}{Q(i)} \qquad (1)$$

If DKL > T, there is a sudden event in the current frame q, where T is an empiric threshold, i represents the index of summation that ranges from 0 to 255.

In an embodiment, the second characteristic is novelty indicating occurrence of an event that is not familiar or predictable. The computation unit 204 can be configured to, for each frame in the subset having suddenness, compute a familiarity rate, compute a predictability rate, and compute a score of novelty by combining the familiarity rate and the predictability rate. Specifically, the computation unit 204 can compute a memorability rate by means of a memorability model as the familiarity rate. Since familiarity is closely related to the notion of memorability, it can be computed by using, for example, a model described in Isola, P., Xiao, J., Parikh, D, Torralba, A., & Oliva, A. (in press), What makes a photograph memorable?, IEEE Pattern Analysis and Machine Intelligence (PAMI). This model takes a colored picture as an input and outputs a memorability rate, i.e., familiarity rate R, regarding computation of a large set of features. From the large set of features and an annotated dataset, it learns the memorability concept and is able of predicting this concept for any new input picture. The computation unit 204 can be further configured to compute the predictability rate by computing mutual information between the frame and one or more previous frames, and compute the predictability rate using the mutual information. The mutual information between the current frame at time t and previous ones is a measure of the variables' mutual dependence, i.e. how much knowing one of these variables reduces uncertainty about the other. The predictability rate P can be computed in Formula (2)

$$P = \frac{1}{N} \sum_{i=1}^{t-1} I(X_t, X_i) \qquad (2)$$

With N being the number of previous frames and the mutual information $I(X_t, X_i)$ between frames $X_t$ and $X_i$ being

$$I(X_t, X_i) = \sum_{x_1 \in X_t} \sum_{x_2 \in X_i} p(x_1, x_2) \log\left(\frac{p(x_1, x_2)}{p(x_1)p(x_2)}\right) \qquad (3)$$

Where $p(x_1, x_2)$ is the joint probability distribution function of $X_t$ and $X_i$, and $p(x_1)$ and $p(x_2)$ are the marginal probability distribution functions of $X_t$ and $X_i$ respectively.

An event never encountered before (low familiarity) and not predictable is emotionally relevant, and such event is novel. Then in an embodiment, the computation unit 204 can be further configured to compute a sum of the familiarity rate and the predictability rate, and compute an inverse of the sum as the score of novelty as in Formula (4)

$$Novelty = \frac{1}{R+P} \qquad\qquad (4)$$

In an embodiment, the selection unit 206 can select one or more emotional key frames based on the computed characteristic of novelty. Specifically, the selection unit 206 determines one or more frames having the highest score of novelty as representing an emotional event, and selects the determined one or more frames as emotional key frames.

Fig. 3 is a flowchart illustrating a method for detecting emotional key frame from a sequence of frames according to an embodiment of the disclosure. The method 300 can be implemented in the image processing device 1 of Fig. 1, or more specifically in the detection part 20 of Fig. 2. As shown in Fig. 3, a sequence of frames is inputted. At step 302, a subset of the frames that have a first characteristic is determined from the sequence of frames. In an embodiment, the first characteristic is suddenness indicating occurrence of a sudden event. The determination of step 302 includes, for each of the frames, computing a divergence between the frame and a previous frame, and determining the frame as having suddenness if the divergence is larger than a preset threshold. At step 304, a second characteristic is computed for each frame in the determined subset. In an embodiment, the second characteristic is novelty indicating occurrence of an event that is not familiar or predictable. The computation of step 304 includes, for each frame in the subset, computing a familiarity rate, computing a predictability rate, and computing a score of novelty by combining the familiarity rate and the predictability rate. Here, a memorability rate can be computed by means of a memorability model as the familiarity rate. The predictability rate can be computed by computing mutual information between the frame and one or more previous frames, and computing the predictability rate using the mutual information. Then, the characteristic of novelty can be obtained by computing a sum of the familiarity rate and the predictability rate, and computing an inverse of the sum as the score of novelty. At step 306, one or more frames in the subset can be selected as emotional key frame that represent an emotional event based on the computed second characteristic. In an embodiment, the selection of step 306 can include determining one or more frames in the subset having the highest score of novelty as representing an emotional event, and selecting the determined one or more frames as emotional key frame(s). The selected emotional key frame(s) can be outputted for user review or further processing. For more details of the respective steps in the method, reference can be made to the above description of the image processing device 1 or the detection part 20.

The above embodiments of the disclosure combine the emotion-relevant psychological notions of Scherer with image processing techniques, and propose detection of "emotional key frame in a more sophisticated and psychologically-inspired way, rather than detecting low level and purely signal-based concepts. This enables detection of emotional events requiring adaptive reaction from viewers. The concept of "emotional key frame" and detection of such key frame can be used in any emotion-based applications including recommendations, model of prediction, retrieval, characteristic transfer, and so on. They can also be applied in various fields, such as pattern recognition and machine learning, for example, in video segmentation, video abstraction, and violence detection.

The present disclosure can be implemented by a computer program product, for example, in the form of a computer-readable medium carrying computer program codes structured in computer program modules. The computer program modules, when executed in a processor, cause the image capturing device or the image processing apparatus to perform the actions described above in conjunction with the figures mentioned above. Alternatively, at least one of the code means can be implemented at least partly as hardware circuits.

The processor can be a single CPU (Central processing unit), but could also comprise two or more processing units. For example, the processor can include general purpose microprocessors; instruction set processors and/or related chips sets and/or special purpose microprocessors such as Application Specific Integrated Circuit (ASICs). The processor can also comprise board memory for caching purposes. For example, the computer program product can be a flash memory, a Random-access memory (RAM), a Read-Only Memory (ROM), or an EEPROM, and the computer program modules described above could in alternative embodiments be distributed on different computer program products in the form of memories.

The disclosure has been described above with reference to embodiments thereof. It should be understood that various modifications, alternations and additions can be made by those skilled in the art without departing from the spirits and scope of the disclosure. Therefore, the scope of the disclosure is not limited to the above particular embodiments but only defined by the claims as attached.

**Claims**

**1.** A method (300) for detecting a key frame from a sequence of frames, the method comprising:

- computing (304) a second characteristic for each frame in a subset of frames having a first characteristic (302);

and

- selecting (306), as the key frame, one or more frames in the subset based on the computed second characteristic.

2. The method (300) of claim 1, wherein said key frame is an emotional key frame that represents emotion and said first characteristic is suddenness indicating occurrence of a sudden event, comprising, for each of the frames of said subset having said first characteristic,

- computing a divergence between said frame and a previous frame; and
- determining that this frame has suddenness if the computed divergence is larger than a preset threshold.

3. The method (300) of claim 1, wherein said key frame is an emotional key frame that represents emotion and said second characteristic is novelty indicating occurrence of an event that is not familiar or predictable, wherein said computing (304) a second characteristic for each frame in said subset comprises:

- computing a familiarity rate for said frame;
- computing a predictability rate for said frame; and
- computing a score of novelty by combining the computed familiarity rate and the computed predictability rate.

4. The method (300) of claim 3, wherein said selecting (306) selects one or more frames having the highest score of novelty in said subset.

5. The method (300) of claim 3, wherein said computing a familiarity rate for said frame comprises:

- computing a memorability rate by means of a memorability model as the familiarity rate.

6. The method (300) of claim 3, wherein said computing a predictability rate for said frame uses mutual information computed between said frame and one or more previous frames.

7. The method (300) of claim 3, wherein said combining is based on the inverse of a sum of the computed familiarity rate and of the computed predictability rate.

8. An apparatus (20) for detecting a key frame from a sequence of frames, the apparatus comprising:

- a computation unit (204) configured to compute a second characteristic for each frame in a subset of frames having a first characteristic; and
- a selection unit (206) configured to select, as the key frame, one or more frames in the subset based on the computed second characteristic.

9. The apparatus (20) of claim 8, wherein said key frame is an emotional key frame that represents emotion, and further comprising a determination unit (202) configured to determine said first characteristic as suddenness indicating occurrence of a sudden event, wherein said determination unit (202) is configured to, for each of the frames,

- compute a divergence between said frame and a previous frame; and
- determine that this frame has suddenness if the computed divergence is larger than a preset threshold.

10. The apparatus (20) of claim 8, wherein said key frame is an emotional key frame that represents emotion and said second characteristic is novelty indicating occurrence of an event that is not familiar or predictable, wherein said computation unit (204) is further configured to, for each frame in the subset,

- compute a familiarity rate for said frame;
- compute a predictability rate for said frame; and
- compute a score of novelty by combining the computed familiarity rate and the computed predictability rate.

11. The apparatus (20) of claim 10, wherein said selection unit (206) is further configured to select one or more frames having the highest score of novelty in said subset.

**12.** The apparatus (20) of claim 10, wherein said computation unit (204) is further configured to compute a predictability rate for said frame using mutual information computed between said frame and one or more previous frames.

**13.** An image processing device (1), comprising:

- an input part (10) configured to receive a sequence of frames;
- a detection part (20) comprising an apparatus for detecting a key frame from a sequence of frames of any of claims 8 to 12; and
- an output part (30) configured to output the detected key frame.

**14.** Computer program product downloadable from a communication network and/or recorded on a medium readable by computer and/or executable by a processor, comprising program code instructions for implementing the steps of a method according to at least one of claims 1 to 7.

**15.** Non-transitory computer-readable medium comprising a computer program product recorded thereon and capable of being run by a processor, including program code instructions for implementing the steps of a method according to at least one of claims 1 to 7.

1

| INPUT PART 10 | DETECTION PART 20 | OUTPUT PART 30 |

**Fig. 1**

20

| DETERMINATION UNIT 202 | COMPUTATION UNIT 204 | SELECTION UNIT 206 |

**Fig. 2**

300

SEQUENCE OF FRAMES

DETERMINE A SUBSET OF THE FRAMES THAT HAVE A FIRST CHARACTERISTIC — 302

COMPUTE A SECOND CHARACTERISTIC FOR EACH FRAME IN THE SUBSET — 304

SELECT, AS EMOTIONAL KEY FRAME, ONE OR MORE FRAMES IN THE SUBSET BASED ON THE COMPUTED SECOND CHARACTERISTIC — 306

EMOTIONAL KEY FRAME(S)

**Fig. 3**

Europäisches
Patentamt

European
Patent Office

Office européen
des brevets

# EUROPEAN SEARCH REPORT

Application Number

EP 14 30 6894

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SONG X ET AL: "Joint Key-Frame Extraction and Object Segmentation for Content-Based Video Analysis", IEEE TRANSACTIONS ON CIRCUITS AND SYSTEMS FOR VIDEO TECHNOLOGY, IEEE SERVICE CENTER, PISCATAWAY, NJ, US, vol. 16, no. 7, 1 July 2006 (2006-07-01), pages 904-914, XP001548843, ISSN: 1051-8215, DOI: 10.1109/TCSVT.2006.877419 | 1-8, 10-15 | INV. G11B27/28 G06K9/00 ADD. H04N5/14 G06F17/30 |
| Y | * the whole document * | 9 | |
| X | SANG HYUN KIM ET AL: "A novel approach to scene change detection using a cross entropy", IMAGE PROCESSING, 2000. PROCEEDINGS. 2000 INTERNATIONAL CONFERENCE ON SEPTEMBER 10-13, 2000, IEEE, PISCATAWAY, NJ, USA, vol. 3, 10 September 2000 (2000-09-10), pages 937-940, XP010529623, ISBN: 978-0-7803-6297-0 | 1,8, 13-15 | |
| Y | * the whole document * | 9 | |
| X | JEAN-NICOLAS OUELLET ET AL: "To Watch or Not to Watch: Video Summarization with Explicit Duplicate Elimination", COMPUTER AND ROBOT VISION (CRV), 2011 CANADIAN CONFERENCE ON, IEEE, 25 May 2011 (2011-05-25), pages 340-346, XP031897344, DOI: 10.1109/CRV.2011.52 ISBN: 978-1-61284-430-5 * the whole document * | 1,3-5, 8-11, 13-15 | |

TECHNICAL FIELDS
SEARCHED (IPC)

G11B
G06K
G06F
H04N

-/--

The present search report has been drawn up for all claims

| Place of search | Date of completion of the search | Examiner |
|---|---|---|
| The Hague | 5 June 2015 | Maetz, Arnaud |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 14 30 6894

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHI-CHENG ZHAO ET AL: "Extraction of Semantic Keyframes Based on Visual Attention and Affective Models", 2007 INTERNATIONAL CONFERENCE ON COMPUTATIONAL INTELLIGENCE AND SECURITY (CIS 2007), 1 December 2007 (2007-12-01), pages 371-375, XP055193774, DOI: 10.1109/CIS.2007.9 ISBN: 978-0-76-953072-7 | 1,8, 13-15 | |
| A | * the whole document * | 3-7, 10-12 | |
| A | CERNEKOVA Z ET AL: "INFORMATION THEORY-BASED SHOT CUT/FADE DETECTION AND VIDEO SUMMARIZATION", IEEE TRANSACTIONS ON CIRCUITS AND SYSTEMS FOR VIDEO TECHNOLOGY, IEEE SERVICE CENTER, PISCATAWAY, NJ, US, vol. 16, no. 1, 1 January 2006 (2006-01-01), pages 82-91, XP001240871, ISSN: 1051-8215, DOI: 10.1109/TCSVT.2005.856896 * the whole document * | 1,3-15 | TECHNICAL FIELDS SEARCHED (IPC) |
| A,D | ISOLA PHILLIP ET AL: "What Makes a Photograph Memorable?", IEEE TRANSACTIONS ON PATTERN ANALYSIS AND MACHINE INTELLIGENCE, IEEE COMPUTER SOCIETY, USA, vol. 36, no. 7, 1 July 2014 (2014-07-01), pages 1469-1482, XP011551858, ISSN: 0162-8828, DOI: 10.1109/TPAMI.2013.200 [retrieved on 2014-06-20] * the whole document * | 1-15 | |

The present search report has been drawn up for all claims

| Place of search | Date of completion of the search | Examiner |
|---|---|---|
| The Hague | 5 June 2015 | Maetz, Arnaud |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 04804828 A

- EP 1695288 A

**Non-patent literature cited in the description**

- The component process model: Architecture for a comprehensive computational model of emergent emotion. **SCHERER, K. R.** Blueprint for affective computing: A sourcebook. 2010, 47-70
- **S. KULLBACK.** Information theory and statistics. John Wiley and Sons, 1959

- **ISOLA, P. ; XIAO, J. ; PARIKH, D ; TORRALBA, A. ; OLIVA, A.** What makes a photograph memorable?. *IEEE Pattern Analysis and Machine Intelligence*